# EUROPÄISCHE PATENTSCHRIFT

(11) **EP 3 593 441 B1**
(45) Veröffentlichungstag und Bekanntmachung des Hinweises auf die Patenterteilung: **01.09.2021**
(21) Anmeldenummer: 18708639.2
(22) Anmeldetag: 27.02.2018
(51) Int. Cl.: H02K 1/27, H02K 1/28, F04D 13/06, H02K 5/128

(54) **ELEKTROMOTOR**
ELECTRIC MOTOR
MOTEUR ÉLECTRIQUE

(30) Priorität: 07.03.2017 DE 102017203736
(43) Veröffentlichungstag der Anmeldung: 15.01.2020
(60) Teilanmeldung: 21183876.8
(73) Patentinhaber: MAHLE International GmbH, 70376 Stuttgart (DE)
(72) Erfinder: MASERA, Sebastjan, 5292 Rence (SI); SEVER, Peter, 9000 Murska Sobota (SI); VODOPIVEC, Robert, 5292 Rence (SI)
(74) Vertreter: BRP Renaud & Partner mbB Rechtsanwälte Patentanwälte Steuerberater
(86) Internationale Anmeldenummer: PCT/EP2018/054797
(87) Internationale Veröffentlichungsnummer: WO 2018/162282

(56) Entgegenhaltungen:
- EP-A1- 1 788 690
- DE-A1-102010 044 453
- JP-A- 2010 136 514
- US-A- 5 140 210
- US-A- 5 881 448
- US-A1- 2002 162 939
- US-A1- 2012 187 792

## Beschreibung

Die vorliegende Erfindung betrifft einen Elektromotor, insbesondere für ein Kraftfahrzeug, gemäß dem Oberbegriff des Anspruchs 1. Außerdem betrifft die Erfindung eine elektrische Maschine oder eine elektrische Flüssigkeitspumpe, die jeweils einen derartigen Elektromotor aufweist. Schließlich betrifft die Erfindung ein Verfahren zur Herstellung eines solchen Elektromotors.

Aus dem Stand der Technik sind eine Vielzahl an unterschiedlichen Elektromotoren bekannt, die als sogenannte Nassläufer ausgebildet sind und zum Teil in direktem Kontakt mit einer Flüssigkeit stehen.

Aus der DE 195 25 704 C1 ist ein gekapselter Rotor der Käfigläuferbauart für einen Asynchronmotor als Nasslaufmotor bekannt, der eine korrosionsfreie Antriebswelle, ein darauf montiertes Blechpaket mit elektrisch kurzgeschlossenen Kurzschlussstäben und einen das Blechpaket umgebenden, flüssigkeitsdichtenden Schutzmantel, der aus einem Umfangsteil und zwei Endscheiben mit je einem zentralen Loch besteht, umfasst. Zur Verbesserung der Flüssigkeitsdichtigkeit des Schutzmantels gegenüber der Antriebswelle ist zwischen der Antriebswelle und den beiden, die Welle umgebenden vorzugsweise als Kurzschlussscheiben ausgebildeten Endscheiben jeweils ein Ringspalt ausgebildet, in dem ein Dichtungsringkörper aus nichtmetallischen, elastischem Material angeordnet ist, der jeweils flüssigkeitsdicht einerseits auf der Antriebswelle sitzt und andererseits an der zugehörigen Endscheibe anliegt.

Aus der WO 2009/037019 A1 ist ein Pumpenrotor für eine Spaltrohrpumpe bekannt, die einen einteiligen Grundkörper mit einer Laufradgrundscheibe und einer Rotoraufnahmebuchse aufweist, wobei eine Rotoreinheit mit Rotormagneten auf der Rotoraufnahmebuchse angeordnet sind.

Aus der WO 2013/053537 A2 ist ein Rotor oder ein Stator einer elektrischen Maschine bekannt, umfassend; eine Rotorachse, die sich in eine axiale Richtung erstreckt, ein Grundkörper, der konzentrisch um die Rotorachse angeordnet ist, zumindest ein Dauermagnet, der in einer Aussparung des Grundkörpers angeordnet ist, und ein Klemmmittel, das den Dauermagneten in der Aussparung fixiert. An gegenüberliegenden Seiten der Aussparung im Grundkörper sind Ausnehmungen vorgesehen, in denen das Klemmmittel angeordnet ist. Weiter ist ein Verfahren zum Montieren eines Dauermagneten in einen zuvor beschriebenen Rotor oder Stator, sowie in einen Motor, der einen zuvor beschriebenen Rotor oder Stator aufweist, bekannt.

Aus der WO 02/39565 A1 ist ein Anker für eine elektrische Maschine bekannt, der zumindest aus einer Rotorwelle und zumindest aus zwei Blechlaminaten besteht, wobei zumindest ein Blechlaminat zumindest eine geschlossene Tasche aufweist, und zumindest ein Magnet in der geschlossenen Tasche angeordnet ist. Die einzelnen Blechlaminate sind um die Rotorwelle verdreht zueinander angeordnet, sodass beispielsweise jeweils abwechselnd die Magnete in einer geschlossenen Tasche angeordnet sind oder eben frei liegen. Durch die Paketierung der einzelnen Blechlaminate sind die Magnete einerseits fest gehalten, anderseits teilweise frei offen liegend, sodass Verluste des magnetischen Flusses reduziert sind.

Aus DE 10 2005 048 731 A1, DE 10 2006 036 392 A1, DE 10 2010 021 595 A1, DE 10 2010 044 453 A1 und WO 2011/048581 A2 sind Rotoren für Elektromotoren bekannt, bei denen Permanentmagnete mittels Haltevorrichtungen am Blechpaket befestigt sind, die radial in Zwischenräume eingreifen, die in Umfangsrichtung zwischen benachbarten Permanentmagneten ausgebildet sind. Die Haltevorrichtungen sind dabei jeweils als einteilige Haltestruktur ausgestaltet, die an einem zusammenhängenden, kontinuierlichen Grundkörper zwei in Umfangsrichtung voneinander abgewandte Außenkonturen besitzt, die mit dem jeweils benachbarten Permanentmagneten zu dessen Fixierung am Blechpaket zusammenwirken.

Ein gattungsgemäßer Elektromotor ist aus der EP 1 788 690 A1 bekannt. Er besitzt einen innenliegenden Rotor, der um eine Drehachse, relativ zu einem außenliegenden Stator drehbar gelagert ist, wobei der Rotor eine um eine Rotorwelle angeordnete topfartige Rotoraufnahmehülse zur Aufnahme einer Ankereinheit aufweist, die eine vielschichtiges Blechpaket mit mehreren Permanentmagneten aufweist, wobei die Rotoraufnahmehülse mit einem Deckel fluiddicht verschlossen ist, wobei die Permanentmagnete in Umfangsrichtung voneinander beabstandet an einer radialen Außenseite des Blechpaketes angeordnet sind, und wobei erste Haltevorrichtungen in Zwischenräumen von benachbarten Permanentmagneten integral am Blechpaket ausgebildet sind und ein Verrutschen in Umfangsrichtung verhindern.

Weitere relevante Elektromotoren sind aus der US 2012/0 187 792 A1 und aus der JP 2010-136514 A1 bekannt.

Die vorliegende Erfindung beschäftigt sich mit dem Problem, für einen Elektromotor der vorstehend beschriebenen Art bzw. für eine damit ausgestattete Kombination eine verbesserte oder zumindest eine andere Ausführungsform anzugeben, die sich insbesondere durch einen verringerten Bauraumbedarf sowie reduzierte Verluste im magnetischen Fluss auszeichnet und insbesondere durch eine einfache Fertigung kostengünstig herzustellen ist.

Dieses Problem wird erfindungsgemäß durch den Gegenstand der unabhängigen Ansprüche gelöst. Vorteilhafte Ausführungsformen sind Gegenstand der abhängigen Ansprüche.

Die Erfindung beruht auf dem allgemeinen Gedanken, einen Elektromotor, insbesondere für ein Kraftfahrzeug, derart auszugestalten, dass einerseits eine Ankereinheit eines Rotors fluiddicht, in einer hierfür vorgesehenen Rotoraufnahmehülse, angeordnet ist und andererseits Permanentmagnete dieser Ankereinheit, welche in Umfangsrichtung voneinander beabstandete auf einer radialen Außenseite eines Blechpakets angeordnet sind, in Bezug auf einen bauraumoptimierte Gestaltung, mittels ersten Haltevorrichtungen, welche in jeweiligen Zwischenräumen von benachbarten Permanentmagneten integral am Blechpaket ausgebildet sind, zumindest in Umfangsrichtung gehalten sind. Hierzu weist der erfindungsgemäße Elektromotor einen innenliegenden Rotor auf, der um eine Drehachse, relativ zu einem außenliegenden Stator drehbar gelagert ist, wobei der Rotor eine um eine Rotorwelle angeordnete topfartige Rotoraufnahmehülse zur Aufnahme der Ankereinheit aufweist. Die Ankereinheit weist ein vielschichtiges Blechpaket und mehrere Permanentmagnete auf. Die Rotoraufnahmehülse ist in einem montierten Zustand mit einem Deckel fluiddicht verschlossen.

Besonders vorteilhaft ist dabei eine Ausführungsform, bei welcher die jeweilige erste Haltevorrichtung im jeweiligen Zwischenraum zwei separate Haltearme aufweist, die in derselben Axialebene in Umfangsrichtung benachbart sind, wobei optional vorgesehen sein kann, dass die beiden Haltearme der jeweiligen Haltevorrichtung voneinander weg geneigt sind, derart, dass die Haltearme an ihren freien Enden in der Umfangsrichtung einen größeren Abstand aufweisen als an ihren festen Enden, mit denen sie mit dem Blechpacket verbunden sind. Hierdurch vereinfacht sich insbesondere die Herstellung des Rotors, da sich die separaten Haltearme beispielsweise besonders einfach plastisch verformen lassen, um die Permanentmagnete am Blechpaket zu fixieren.

Eine weitere vorteilhafte Ausführungsform geht von einem Blechpacket aus, das mehrere axial aneinander anliegende Bleche aufweist, und schlägt vor, dass die beiden Haltearme der jeweiligen Haltevorrichtung an demselben Blech ausgebildet sind. Dies vereinfacht die integrale Ausgestaltung der Haltearme am jeweiligen Blech. Beispielsweise werden die Bleche aus einer Blechbahn gestanzt oder geschnitten. Zweckmäßig weisen mehrere Bleche jeweils solche daran integral ausgeformte Haltearme auf. Bevorzugt sind alle oder im Wesentlichen alle Bleche des Blechpaktes mit den integral daran ausgeformten Haltearmen ausgestattet.

In einer vorteilhaften Ausführungsform des erfindungsgemäßen Elektromotors weist eine derartige erste Haltevorrichtung in Umfangsrichtung beidseitig Haltearme auf, die derart geneigt in Richtung der dazu in Umfangsrichtung benachbarten Permanentmagnete ausgebildet sind, dass die Permanentmagnete radial am Blechpaket formschlüssig gehalten sind. Die Permanentmagnete, die zwischen den ersten Haltevorrichtungen am Blechpaket angeordnet sind, weisen an deren Längsenden in Umfangsrichtung eine komplementäre Neigung zu der Neigung der Haltearme auf, sodass die Permanentmagnete in die dafür vorgesehenen Zwischenräume zwischen den ersten Haltevorrichtungen Platz finden. Ferner sind die Permanentmagnete derart ausgeformt, dass die jeweiligen Längsenden in Umfangsrichtung Schrägen aufweisen, die einen Neigungsgrad inne haben, der derart gewählt ist, dass eine radial innenliegende Umfangskontur des jeweiligen Permanentmagneten größer ist, als eine radial außenliegenden Umfangskontur des jeweiligen Permanentmagneten. Das heißt, dass sich durch die zuvor beschriebene Ausgestaltung der Permanentmagnete, ein Formschluss zwischen den Permanentmagneten und den integral am Blechpaket angeordneten ersten Haltevorrichtungen einstellt, mit dem Ergebnis, einer radialen Fixierung der Permanentmagnete am Blechpaket.

In einer bevorzugten Weiterbildung weist das Blechpaket der Ankereinheit im Bereich der ersten Haltevorrichtung, besonders bevorzugt im Bereich der Haltearme, eine axiale Aussparung auf, die nutartig ausgebildet ist. Die nutartige Aussparung ist dann zweckmäßig, wenn die Haltearme einer ersten Haltevorrichtung, beim Einsetzen der Permanentmagnete, eine elastische oder plastische Bewegung erfahren, aufgrund einer flächenmäßigen Verdrängung der Permanentmagnete. Gleiches gilt für den Fall, dass die Halterarme in Richtung der Permanentmagnete vorgespannt sind und beim Einsetzen der Permanentmagnete, entgegen der Vorspannung, verdrückt sind.

Bevorzugt ist hierbei eine Ausführungsform, bei welcher jedem der vorstehend genannten Haltearme der jeweiligen Haltevorrichtung jeweils eine solche nutartige, axiale Aussparung zugeordnet ist, die sich an einer dem jeweils benachbarten Permanentmagneten zugewandten Seite des jeweiligen Haltearms im Blechpaket befindet.

In einer weiteren vorteilhaften Ausführungsform weist ein derartiger Haltearm der ersten Haltevorrichtung zusätzlich an einem dem Blechpaket abgewandten Längsende eine Rastnase auf, die in Umfangsrichtung einen solchen Permanentmagneten übergreift. Die Rastnase umschließt den Permanentmagneten zumindest teilweise an dessen radialer Außenseite und bewirkt dahingehend eine radiale Fixierung des Permanentmagneten, sowie eine Fixierung in Umfangsrichtung. Bevorzugt ist, dass die Kombination der ersten Haltevorrichtung mit Haltearmen und Rastnasen, ebenfalls in Umfangsrichtung gegen die Permanentmagnete vorgespannt. Die jeweilige Rastnase kann dabei an dem freien Ende des jeweiligen, weiter oben genannten Haltearms ausgeformt sein.

Gemäß einer Weiterbildung kann vorgesehen sein, dass an einer inneren Mantelfläche einer äußeren Wandung der Rotoraufnahmehülse radial nach innen vorstehende Vorsprünge ausgebildet sind, die wenigstens eine der Rastnasen radial nach innen gegen den jeweiligen Permanentmagneten andrücken. Die Vorsprünge bewirken neben einer verbesserten radialen Anpressung der Permanentmagnete gegen das Blechpaket außerdem eine Sicherung der Fixierung der Permanentmagnete am Blechpaket durch die Haltevorrichtungen bzw. deren Haltearme bzw. deren Rastnasen.

Bevorzugt ist eine Ausgestaltung, bei welcher ein radial äußeres Ende der jeweiligen Haltevorrichtung die radial am weitesten außenliegende Außenkontur des Blechpaktes bildet. Dieses radial äußere Ende der jeweiligen Haltevorrichtung kann durch die jeweilige vorstehend genannte Rastnase oder durch die freien Enden der weiter oben genannten Haltearme gebildet sein.

In einer vorteilhaften Ausführungsform weisen die Permanentmagnete beidseitig, in Umfangsrichtung an den der ersten Haltevorrichtung zugwandten Längsseiten, Stufen auf, an den die Rastnasen der ersten Haltevorrichtung mit den Permanentmagneten verrasten. Vorteilhaft an dieser Ausführungsvariante ist, dass in Bezug auf den benötigten Bauraumbedarf eine Reduzierung zu der Alternative mit den umgreifenden Rastansen möglich ist, da die Rastnasen die jeweiligen Permanentmagnete nicht an deren radialen Außenseite übergreifen, sondern vielmehr an der beispielsweise mittig angeordneten Stufe.

Gemäß der Erfindung weist der Deckel an einem äußeren Rand in Umfangsrichtung keilförmige Halteelemente auf, die in einen Ringraum zwischen den Permanentmagneten und einer inneren Mantelfläche einer äußeren Wandung der Rotoraufnahmehülse greifen und die Permanentmagnete radial verkeilen. Die Rotoraufnahmehülse weist eine in Umfangsrichtung umlaufende, keilförmige Haltekontur auf, die auf einer dem Deckel gegenüberliegenden Seite des Permanentmagneten, im Bereich eines Bodens der Rotoraufnahmehülse vorgesehen ist und ebenso im Ringraum zwischen den Permanentmagneten und der äußeren Wandung der Rotoraufnahmehülse angeordnet ist, damit die Permanentmagnete auch an dieser Seite, insbesondere beidseitig an den axialen Längsseiten gleichermaßen radial verkeilt sind.

Eine weitere Ausführungsvariante sieht vor, dass an einer inneren Mantelfläche der äußeren Wandung der Rotoraufnahmehülse zumindest eine zweite Haltevorrichtung vorsteht, welche zumindest einen der Permanentmagnete radial zwischen dem Blechpaket und der äußeren Wandung verklemmt. Bevorzugt weist die Rotoraufnahmehülse mehrere zweite Haltevorrichtungen auf, sodass alle Permanentmagneten mindestens von einer solchen zweiten Haltevorrichtung gegen das Blechpaket angedrückt sind.

In einer bevorzugten Ausführungsform ist die zweite Haltevorrichtung als eine wulstartige Verdickung ausgeformt und zumindest ein derartiger Permanentmagnet ist mit einer derartigen wulstartigen Verdickung radial gegen das Blechpaket angedrückt. Besonders bevorzugt ist ein derartiger Permanentmagnet von mehreren derartigen wulstartigen Verdickungen gegen das Blechpaket angedrückt.

Eine weitere vorteilhafte Ausführungsform, der zuvor beschriebenen Ausführungsvariante, mit einer zweiten Haltevorrichtung, sieht vor, dass die zweite Haltevorrichtung aus zwei einander zugewandte, geneigten Haltearmen gebildet ist. Die Haltearme der zweiten Haltevorrichtung wirken sowohl radial als auch in Umfangsrichtung gegen die Permanentmagnete und drücken diese dahingehend radial gegen das Blechpaket und fixieren die Permanentmagnete in Umfangsrichtung.

Zweckmäßig läuft die zweite Haltevorrichtung zumindest teilweise abgeschrägt in der äußeren Wandung, in Richtung eines offenen Längsendes der topfartigen Rotoraufnahmehülse, aus. Mit anderen Worten, ist im Bereich der Öffnung der Rotoraufnahmehülse, die zweite Haltevorrichtung zumindest teilweise über einen axialen Längsabschnitt geneigt, damit ein Einführen der Permanentmagnete erleichtert möglich ist.

In einer vorteilhaften Ausführungsform ist die Rotoraufnahmehülse als Kunststoff-Spritzgussteile ausgebildet. Zweckmäßig ist ebenso der Deckel zum Verschließen der Rotoraufnahmehülse als ein Kunststoff-Spritzgussteil hergestellt. Bevorzugt ist die Rotoraufnahmehülse direkt an die Rotorwelle angespritzt oder direkt an eine Lagerbuchse, die zur Aufnahme einer derartigen Rotorwelle ausgebildet ist.

In einer vorteilhaften Weiterbildung weist die Rotoraufnahmehülse an deren inneren Wandung an einer der Öffnung zugewandten Seite eine Ringstufe auf, die eine zum Deckel und zur Rotorwelle bzw. zur Lagerbuchse offenen Aussparung bildet. Diese Aussparung verhindert, dass der Deckel mit der Rotorwelle oder der Lagerbuchse bei einem Fertigungsprozess miteinander verklebt. Ferner kann die Aussparung als Auffangraum für überschüssiges Material aus dem Fertigungsprozess dienen.

In einer vorteilhaften Ausführungsform ist der Deckel für die Rotoraufnahmehülse radial beabstandet von der Rotorwelle bzw. der Lagerbuchse angeordnet. Die radiale Beabstandung ist dahingehend sinnvoll, dass bei einem Fertigungsprozess, bei dem der Deckel nachgelagert auf die Rotoraufnahmehülse aufgebracht wird, eine axial freie Bewegung, zum Verbinden der beiden Bauteile miteinander, den Fertigungsschritt erleichtert. Die Rotoraufnahmehülse weist an einer dem Deckel zugewandten Seite, an dessen innerer Wandung und dessen äußerer Wandung, einen sich verjüngenden Kragen auf, der derart ausgeformt ist, dass ein nachgelagerter Fertigungsschritt positiv durch die Form beeinflusst ist. Beispielsweise beim Ultraschallschweißen, ist durch den sich verjüngenden Kragen eine verbesserte Energieeinleitung, in die zu verschweißenden Stellen, gegeben.

Zweckmäßig ist der Deckel zum fluiddichten Abschließen eines in der Rotoraufnahmehülse angeordneten Ankeraufnahmeraumes vorgesehen. Der Deckel ist bevorzugt, mit Hilfe eines Ultraschallschweißverfahrens, fest mit der Rotoraufnahmehülse verschweißt. Im Rahmen der Erfindung ist ebenfalls denkbar, dass der Deckel mit der Rotoraufnahme durch ein Rotationsreibschweißverfahren oder ein Laserschweißverfahren aufgebracht ist.

Besonders vorteilhaft ist eine Ausführungsform, bei welcher der Deckel als Pumpenlaufrad zum Fördern einer Flüssigkeit ausgestaltet ist. Hierdurch lässt sich der hier vorgestellte Elektromotor besonders einfach zur Herstellung einer kompakten Flüssigkeitspumpe verwenden.

Bei einem erfindungsgemäßen Verfahren zum Herstellen eines zuvor beschriebenen Elektromotors wird das Blechpaket in axialer Richtung in den Ankeraufnahmeraum der Rotoraufnahmehülse eingeschoben bzw. eingesetzt. Daraufhin wird zumindest ein derartiger Permanentmagnet in axialer Richtung in den Bereich zwischen den ersten Haltevorrichtungen des Blechpaketes und der äußeren Wandung der Rotoraufnahmehülse geschoben. Zuletzt wir die Rotoraufnahmehülse, durch Aufschweißen des Deckels, fluiddicht verschlossen.

In einem weiteren erfindungsgemäßen Verfahren zum Herstellen eines zuvor beschriebenen Elektromotors, insbesondere für eine elektrische Flüssigkeitspumpe, kann dem zuvor beschriebene Verfahren ein weitere Verfahrensschritt hinzugefügt werden, welcher ein Aufschweißen eines bezüglich des Deckels separaten Pumpenlaufrades an die Rotoraufnahmehülse mittels Ultraschallschweißens oder Laserstrahlschweißen beinhaltet. In diesem Fall, bildet die Rotoraufnahmehülse eine hermetische Kapsel, die die Ankereinheit umgibt und die sowohl die Rotoraufnahmehülse, als auch den Deckel, gleichermaßen betrifft. Bevorzugt ist auch hier eine Variante, bei welcher der Deckel selbst das Pumpenlaufrad bildet bzw. als Pumpenlaufrad ausgestaltet ist.

Eine erfindungsgemäße elektrische Maschine weist zumindest einen derartigen Elektromotor auf, der nach der vorangehend beschriebenen Art ausgestaltet bzw. ausgeführt ist.

Eine erfindungsgemäße elektrische Flüssigkeitspumpe zum Fördern einer Flüssigkeit weist ein Pumpenlaufrad, das, wenn es dreht, die Flüssigkeit fördert, und einen Elektromotor der vorstehend beschriebenen Art auf, der zum drehenden Antreiben des Pumpenlaufrads mit diesem antriebsverbunden ist. Zweckmäßig kann hierzu das Pumpenlaufrad unmittelbar mit dem Rotor drehfest verbunden sein. Insbesondere kann gemäß einer ersten Variante das Pumpenlaufrad separat zum Deckel ausgebildet sein und unmittelbar mit dem Rotor drehfest verbunden sein, insbesondere mittels Ultraschallschweißens mit diesem verschweißt sein. Alternativ kann gemäß einer zweiten Variante der Deckel als Pumpenlaufrad ausgestaltet sein und unmittelbar mit dem Rotor drehfest verbunden sein, insbesondere mittels Ultraschallschweißens mit diesem verschweißt sein. Bei diesen Ausgestaltungen dreht bzw. rotiert somit das Pumpenlaufrad synchron mit dem Rotor um dessen Drehachse.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine isometrische Darstellung eines gekapselten Rotors, der auf einer als Hohlwelle ausgeformten Rotorwelle angeordnet ist,
- Fig. 2: eine Querschnittdarstellung eines Elektromotors mit einem innenliegenden Rotor und einem außenliegenden Stator,
- Fig. 3: eine Längsschnittdarstellung aus Fig. 1 mit einer auf einer Rotorwelle angeordneten Rotoraufnahmehülse,
- Fig. 4: eine Detailansicht IV aus Fig. 3 im Bereich eines Deckels, der eine Rotoraufnahmehülse verschließt,
- Fig. 5: eine Querschnittdarstellung des Rotors aus Fig. 3 gemäß Schnittlinie V-V,
- Fig. 6: eine Detailansicht VI aus Fig. 5 im Bereich eines Blechpakets und daran mittels einer ersten Haltevorrichtung angeordneten Permanentmagneten,
- Fig. 7: die Ansicht aus Fig. 6 in einer vorteilhaften Ausführungsvariante mit einer abweichenden ersten Haltevorrichtung,
- Fig. 8: eine Detailansicht VIII aus Fig. 7 im Bereich der ersten Haltevorrichtung,
- Fig. 9: die Ansicht aus den Fig. 6 und 7 in einer weiteren vorteilhaften Ausführungsvariante mit stufenförmigen Permanentmagneten und einer abweichenden ersten Haltevorrichtung,
- Fig. 10: eine isometrische Darstellung einer Rotoraufnahmehülse,
- Fig. 11: eine Detailansicht einer vorteilhaften Ausführungsvariante mit einer abweichenden zweiten Haltevorrichtung,
- Fig. 12: eine isometrische Darstellung einer Ausführungsvariante eines Deckels zum Verschließen einer Rotoraufnahmehülse mit keilförmigen Halteelementen,
- Fig. 13: eine Längsschnittdarstellung einer Ausführungsvariante einer Rotoraufnahmehülse mit aufgesetztem Deckel aus Fig. 12,
- Fig. 14: eine Detailansicht wie in Fig. 8, jedoch bei einer anderen Ausführungsform,
- Fig. 15: ein Längsschnitt wie in Fig. 13, jedoch bei einer anderen Ausführungsform.

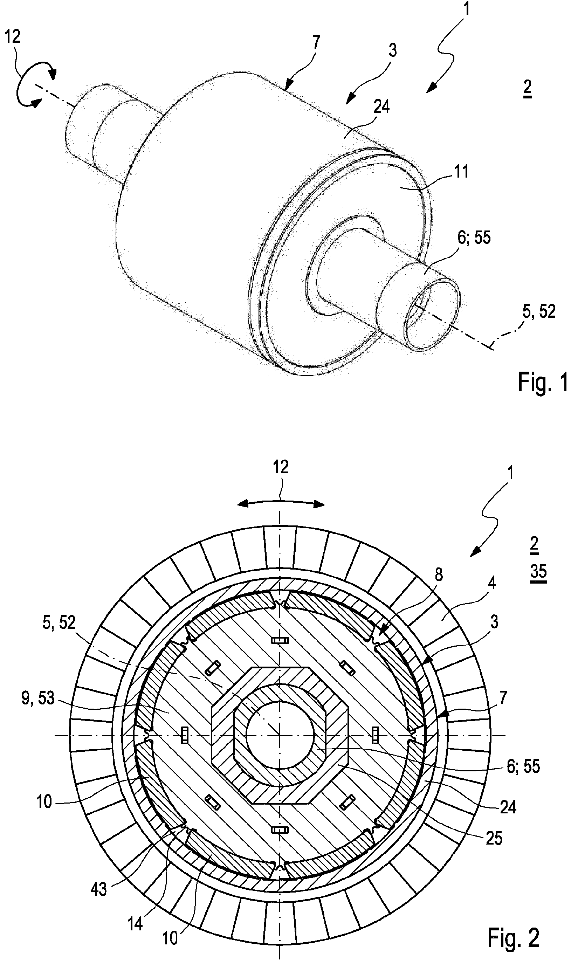

Fig. 1 zeigt eine isometrische Darstellung eines innenliegenden Rotors 3 eines erfindungsgemäßen Elektromotors 1, der auf einer als Hohlwelle ausgeformten Rotorwelle 6 angeordnet ist. Der Rotor 3 ist um eine Drehachse 5 relativ zu einem außenliegenden Stator 4 in Umfangsrichtung 12 drehbar gelagert. Die Rotorwelle 6 steht in einer Wirkverbindung mit dem Rotor 3 als solches. Eine Rotoraufnahmehülse 7 ummantelt die Rotorwelle 6 zumindest teilweise über einen axialen Längsabschnitt. Anstelle der Rotorwelle 6 ist es ebenso denkbar, dass eine Lagerbuchse 55 zur Aufnahme einer derartigen Rotorwelle 6 von einer Rotoraufnahmehülse 7 umspritzt ist. Im weiteren Verlauf kann jeweils eine derartige Lagerbuchse 55 anstelle der Rotorwelle 6 eingesetzt sein.

Im vorliegenden Zusammenhang definiert die Drehachse 5 die Längsachse 52 des Rotors 3, die sich demnach parallel zur Drehachse 5 erstreckt. Die Radialrichtung steht im Allgemeinen senkrecht auf der Längsachse und nur im Besonderen senkrecht auf der Drehachse 5. Die Umfangsrichtung, die in einigen der Figuren durch einen Doppelpfeil angedeutet und mit 12 bezeichnet ist, läuft um die Drehachse 5 um.

Fig. 2 zeigt eine Querschnittdarstellung eines erfindungsgemäßen Elektromotors 1, insbesondere für ein Kraftfahrzeug 2, mit einem innenliegenden Rotor 3 und einem außenliegenden Stator 4, wobei der Stator 4 fest gelagert ist und der Rotor 3 drehbar in der Umfangsrichtung 12 um die Drehachse 5 auf der Rotorwelle 6 gelagert ist. Ferner kann der schematisch gezeigte Elektromotor 1 ein Bauteil einer im Übrigen nicht gezeigten elektrischen Maschine 35 sein.

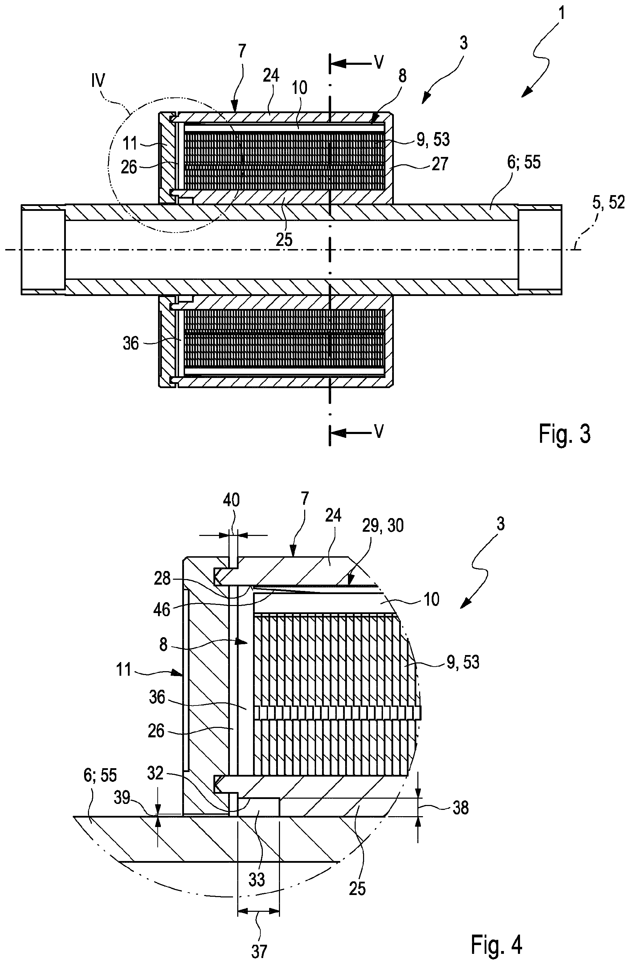

Fig. 3 zeigt eine Längsschnittdarstellung aus Fig. 1 mit einer auf einer Rotorwelle 6 angeordneten Rotoraufnahmehülse 7. Die Rotoraufnahmehülse 7 ist topfartig ausgeformt und weist eine innere Wandung 25 auf, die in unmittelbaren Kontakt mit der Rotorwelle 6 steht. Ein Längsende der Rotoraufnahmehülse 7 ist mit einem Boden 27 verschlossen. Der Boden 27 verbindet die innere Wandung 25 mit einer äußeren Wandung 24 der Rotoraufnahmehülse 7. Der Boden 27 kann insbesondere einstückig mit der inneren Wandung 25 und der äußeren Wandung 24 hergestellt sein, z.B. durch Spritzformen. Ein anderes Längsende der Rotoraufnahmehülse 7 weist eine ringförmige Öffnung 26 auf, die zum Einsetzen einer Ankereinheit 8 vorgesehen ist. Die Öffnung 26 der Rotoraufnahmehülse 7 kann mit einem Deckel 11 nach Einsetzen der Ankereinheit 8 fluiddicht verschlossen sein. Die Rotoraufnahmehülse 7 umschließt einen Ankeraufnahmeraum 36, der für die Ankereinheit 8 vorgesehen ist.

Fig. 4 zeigt eine Detailansicht IV aus Fig. 3 im Bereich eines Deckels 11, der eine Rotoraufnahmehülse 7 verschließt. Die innere Wandung 25 der Rotoraufnahmehülse 7 weist, an einer der Öffnung 26 zugewandten Seite, eine Ringstufe 32 auf. Eine sich durch die Ringstufe 32 ergebende offene Aussparung 33 kann sich in längsaxialer Richtung, über einen Längsabschnitt 37, erstrecken. In radialer Richtung kann sich ein erster Radialspalt 38 der Ringstufe 32 bzw. der Aussparung 33 über beispielsweise eine Hälfte der Materialstärke der inneren Wandung 25 der Rotoraufnahmehülse 7 erstrecken. Der Deckel 11 ist ebenfalls radial durch einen zweiten Radialspalt 39 beabstandet von der Rotorwelle 6 angeordnet. Ferner kann der Deckel 11 zudem an der inneren Wandung 25 und der äußeren Wandung 24 der Rotoraufnahmehülse 7 in Richtung des Deckels 11 ein Axialspiel 40 aufweisen.

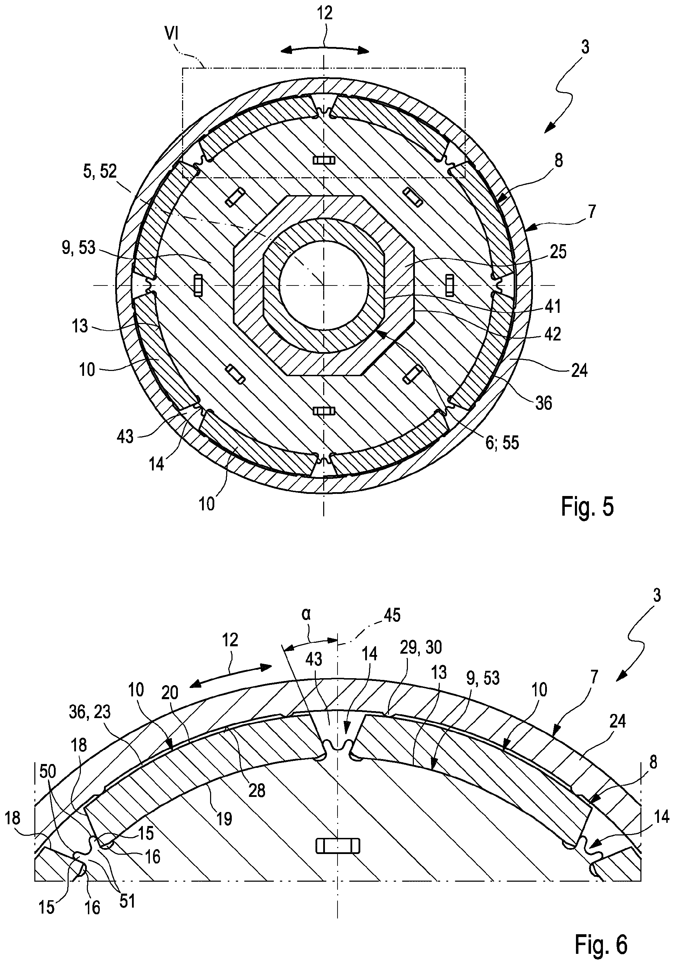

Fig. 5 zeigt eine Querschnittdarstellung des Rotors 3 aus Fig. 3 gemäß Schnittlinie V-V. Die Rotorwelle 6 kann zur Erreichung eines Formschlusses mit der Rotoraufnahmehülse 7 an einer sonst zylindrischen Außenmantelfläche zumindest eine Einkerbung 41 aufweisen. Durch ein Anspritzen der Rotoraufnahmehülse 7 an die Rotorwelle 6, steht die Rotorwelle 6 gänzlich in Umfangsrichtung 12 in unmittelbaren und formschlüssigen Kontakt zur inneren Wandung 25 der Rotoraufnahmehülse 7. Der Formschluss zwischen der Rotorwelle 6 und der Rotoraufnahmehülse 7 dient der Drehmomentübertragung, wobei jegliche Ausgestaltung zur formschlüssigen oder reibschlüssigen Drehmomentübertragung im Rahmen der Erfindung geschützt ist. Die innere Wandung 25 der Rotoraufnahmehülse 7 kann, an einer der äußeren Wandung 24 der Rotoraufnahmehülse 7 zugewandte Seite, im Querschnittsprofil als ein Vieleck 42 ausgebildet sein. Ein nachträglich eingeschobenes Blechpaket 9 weist eine zum Vieleck 42 komplementär ausgestaltete Kontur auf, sodass sich auch hier ein Formschluss zwischen dem Blechpaket 9 und der Rotoraufnahmehülse 7 einstellt. Das Blechpaket 9, welches nachträglich in die Rotoraufnahmehülse 7 geschoben sein kann, bildet zusammen mit Permanentmagneten 10, welche an einer radialen Außenseite 13 des Blechpakets 9 angeordnet sind, eine Ankereinheit 8. In der dargestellten beispielhaften Ausführungsform, weist die Ankereinheit 8 insgesamt acht Permanentmagneten 10 auf, die mit ersten Haltevorrichtungen 14, welche jeweils in einem Zwischenraum 43 zwischen benachbarten Permanentmagneten 10 integral am Blechpaket 9 angeordnet sind, gehalten sind. Die Permanentmagnete 10 sind somit radial zwischen dem Blechpaket 9 und der äußeren Wandung 24 der Rotoraufnahmehülse 7 angeordnet. Das Blechpaket 9 besteht in üblicher Weise aus einer Vielzahl separater Bleche 53, die in der Axialrichtung 52 aufeinander liegen. Zweckmäßig werden hierbei identische Bleche 53 verwendet. Sie können lose aneinander anliegen und mit entsprechenden Ankern miteinander axial verspannt sein. Sie können grundsätzlich auch miteinander verklebt oder verlötet sein.

Fig. 6 zeigt eine Detailansicht VI des Rotors 3 aus Fig. 5 im Bereich eines Blechpakets 9 und daran mittels der ersten Haltevorrichtung 14 angeordneten Permanentmagneten 10. Die jeweilige Haltevorrichtung 14 weist innerhalb derselben Axialebene, die hier durch die Schnittebene der Fig. 6 repräsentiert ist, zwei separate Haltearme 15 auf. Erkennbar sind im bevorzugten Beispiel die beiden Haltearme 15 der jeweiligen Haltevorrichtung 14 voneinander weg geneigt. Diese Neigung ist so gewählt, dass die Haltearme 15 an ihren radial außen liegenden freien Enden 50 in der Umfangsrichtung 12 einen größeren Abstand haben als an ihren radial innen liegenden festen Enden 51, mit denen sie mit dem Blechpacket 9 verbunden sind. Ferner ist hier vorgesehen, dass die beiden Haltearme 15 der jeweiligen Haltevorrichtung 14 an demselben Blech 53 ausgebildet sind. Zweckmäßig ist nahezu jedes oder jedes Blech 53 mit diesen Haltearmen 15 versehen. Demensprechend kann die erste Haltevorrichtung 14 in Umfangsrichtung 12 benachbart, also beidseitig diese separaten Haltearme 15 aufweisen, die derart geneigt in Richtung der dazu in Umfangsrichtung 12 benachbarten Permanentmagnete 10 ausgebildet sind, dass die Permanentmagnete 10 radial am Blechpaket 9 formschlüssig gehalten sind. Die Haltearme 15 weisen hierzu jeweils einen Neigungswinkel α auf, der sich über eine Symmetrieebene 45 der ersten Haltevorrichtung 14 und der Ausrichtung der Haltearme 15 in Umfangsrichtung 12 definiert. Dieser Neigungswinkel α beschreibt im Wesentlichen auch einen Neigungsgrad von Schrägen 18, welche sinngemäß an den jeweiligen Längsenden in Umfangsrichtung 12 der Permanentmagnete 10 ausgeformt sind. Die Schrägen 18 an den Längsenden der Permanentmagnete 10 können somit komplementär zu dem Neigungswinkel α der Haltearme 15 der ersten Haltevorrichtung 14 ausgebildet sein. Die erste Haltevorrichtung 14 bzw. die beidseitigen Haltearme 15 können je nach Ausgestaltung des Neigungswinkels α und des Neigungsgrades der Schrägen 18 der Permanentmagnete 10, die Permanentmagnete 10 radial in einer fixen Position halten. Ferner kann der Neigungsgrad der Schrägen 18 derart ausgewählt sein, dass eine radial innenliegende Umfangskontur 19 des jeweiligen Permanentmagneten 10 größer ist als eine radial außenliegende Umfangskontur 20 des jeweiligen Permanentmagneten 10, wobei der Neigungsgrad der Schrägen 18 dem Neigungswinkel α der Haltearme 15 der ersten Haltevorrichtung 14 entsprechen sollte. Das Blechpaket 9 kann im Bereich der ersten Haltevorrichtung 14, insbesondere jeweils im Bereich der Haltearme 15, längsaxiale Aussparungen 16 aufweisen, die nutartig ausgeformt sein können. Erkennbar befinden sich diese Aussparungen 16 an jedem der Haltearme 15, und zwar dort jeweils an einer dem benachbarten Permanentmagneten 10 zugewandten Seite.

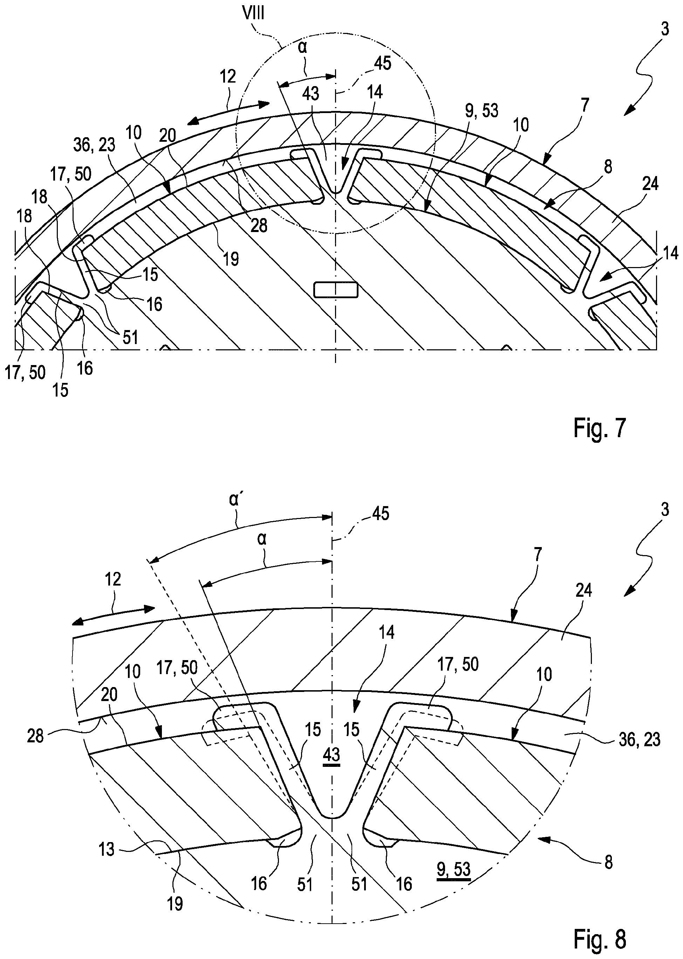

Fig. 7 zeigt die Detailansicht aus Fig. 6 in einer vorteilhaften Ausführungsvariante mit einer abweichenden ersten Haltevorrichtung 14. Ein derartiger Halterarm 15 der ersten Haltevorrichtung 14 kann an einem dem Blechpaket 9 abgewandten Längsende eine Rastnase 17 aufweisen, die in Umfangsrichtung 12 jeweils einen derartigen Permanentmagneten 10 übergreift. Eine derartige Rastnase 17 kann den Permanentmagneten 10 zumindest teilweise an dessen radialer Außenseite 13 umschließen und bewirkt dahingehend eine radiale Fixierung des Permanentmagneten 10 sowie eine Fixierung in Umfangsrichtung 12. Zweckmäßig, wie beispielhaft in der Ausführungsvariante gezeigt, können alle Haltearme 15 der ersten Haltevorrichtung 14 mit den beschriebenen Rastnasen 17 ausgestattet sein.

Fig. 8 zeigt eine Detailansicht VIII aus Fig. 7 im Bereich einer ersten Haltevorrichtung 14, in der eine elastische oder plastische Bewegung der Haltearme 15 angedeutet ist. In einem ersten Zustand, vor einem Einschub der Permanentmagnete 10 in den dafür vorgesehenen Bereich zwischen den Haltearmen 15 der ersten Haltevorrichtung 14, weisen die Haltearme 15 einen Neigungswinkel a' auf, der zumindest größer ist, als ein Neigungswinkel α in einem zweiten Zustand, nach einem Einschub der Permanentmagnete 10 in den Bereich zwischen den Haltearmen 15. Der größere Neigungswinkel a' im ersten Zustand begründet sich in einer Vorspannung der Haltearme 15 der ersten Haltevorrichtung 14 in Umfangsrichtung 12 gegen die Permanentmagnete 10.

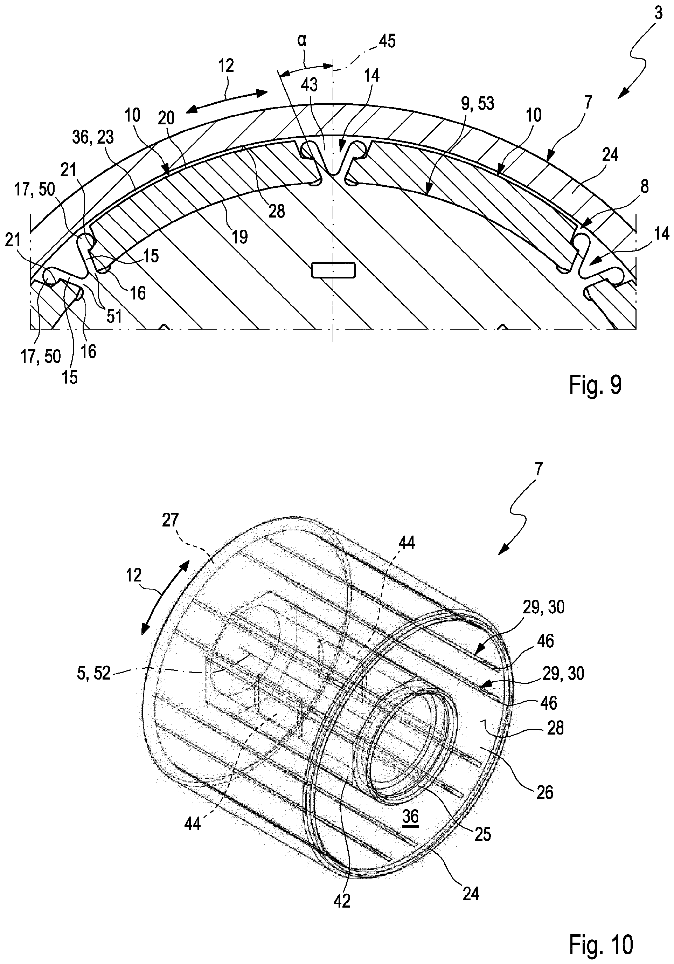

Fig. 9 zeigt die Ansicht aus der Fig. 6 und der Fig. 7 in einer weiteren vorteilhaften Ausführungsvariante mit stufenförmigen Permanentmagneten 10 und einer abweichenden ersten Haltevorrichtung 14. Die Permanentmagnete 10 weisen beidseitig in Umfangsrichtung 12, an den der ersten Haltevorrichtung 14 bzw. den Haltearmen 15 zugwandten Längsseiten, Stufen 21 auf, an den abgerundete Rastnasen 17 der ersten Haltevorrichtung 14 mit den Permanentmagneten 10 verrasten. Die Stufen 21 an den Permanentmagneten 10 können, beispielsweise, mittig an den Längsseiten in Umfangsrichtung 12 angeordnet sein. Die Haltearme 15 der ersten Haltevorrichtung 14 erstrecken sich radial, demgemäß, lediglich über die Hälfte der radialen breite der Permanentmagnete 10. An einer dem Blechpaket 9 abgewandten Längsseite der Haltearme 15 können die Rastnasen 17 angeordnet sein, die die Permanentmagnete 10 in Umfangsrichtung 12 teilweise übergreifen und somit sowohl in Umfangsrichtung 12 als auch radial halten.

Fig. 10 zeigt eine isometrische Darstellung der Rotoraufnahmehülse 7 mit einer daran angeordneten zweiten Haltevorrichtung 29. Die zweite Haltevorrichtung 29 kann als wulstartige Verdickung 30 ausgebildet sein, die an einer inneren Mantelfläche 28 der äußeren Wandung 24 der Rotoraufnahmehülse 7 hervorsteht. Die zweite Haltevorrichtung 29, die in dieser Abbildung als wulstartige Verdickung 30 ausgebildet ist, kann zumindest teilweise über einen axialen Längsabschnitt, an einer der Öffnung 26 zugewandte Seite, eine Verjüngung 46 aufweisen, die in der äußeren Wandung 24 der Rotoraufnahmehülse 7 ausläuft. Ferner ist in der Abbildung ein Negativ 44 zu der Einkerbung 41 der Rotorwelle 6 zu erkennen. Die beiden, beispielhaft in der Ausführungsvariante, vorgesehenen Negative 44 stellen den Bereich, insbesondere aus Kunststoff, dar, der im Bereich der Einkerbungen 41 der Rotorwelle 6 zusätzlich mit angespritzt sein kann.

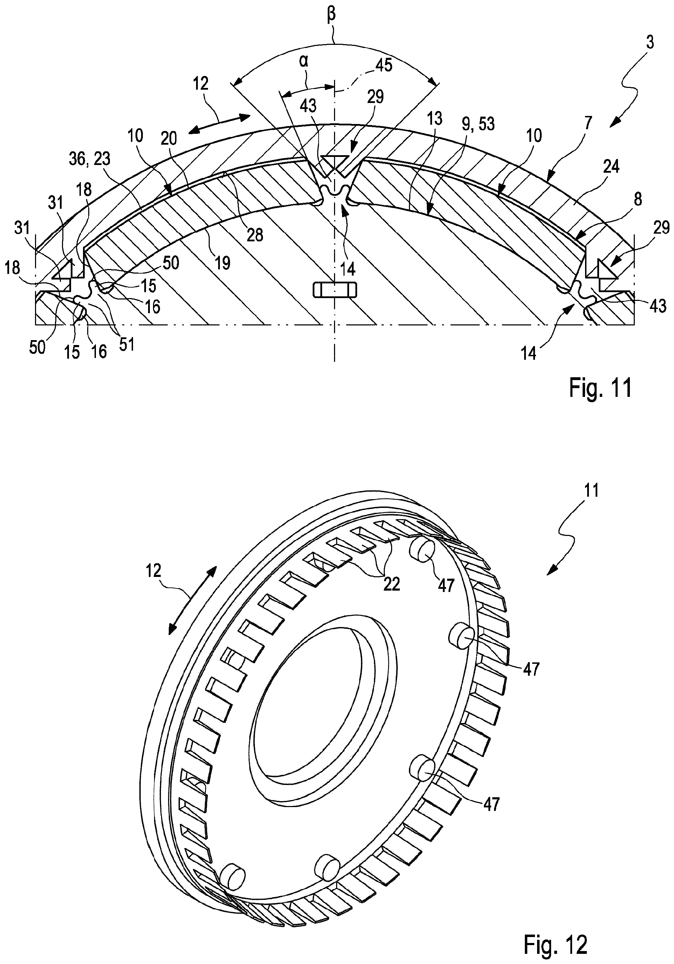

Fig. 11 zeigt eine Detailansicht einer vorteilhaften Ausführungsvariante der Rotoraufnahmehülse 7 mit einer abweichenden zweiten Haltevorrichtung 29. Die gezeigte zweite Haltevorrichtung 29 weist zwei einander zugewandte, geneigte Haltearme 31 auf, die mit den Permanentmagneten 10 in Kontakt stehen und diese radial verklemmen. Die Haltearme 31 der zweiten Haltevorrichtung 29 stehen in einem Winkel β zueinander, der zumindest größer 0° und kleiner 180° sein sollte. Die Haltearme 30 der zweiten Haltevorrichtung 29 erstrecken sich maximal über eine Länge, die derart ausgewählt ist, dass zumindest eine definierte Beabstandung der Haltearme 30 der zweiten Haltevorrichtung 29 vorgesehen ist. Die erste Haltevorrichtung 14 und die zweite Haltevorrichtung 29 stehen bei der gezeigten Ausführungsform nicht miteinander in Verbindung. Ein unmittelbarer Kontakt zwischen der ersten Haltevorrichtung 14 und der zweiten Haltevorrichtung 29, insbesondere ein Zusammenwirken der beiden Haltevorrichtungen 14, 29 zur radialen Fixierung der Permanentmagnete 10, ist im Rahmen dieser Erfindung denkbar.

Fig. 12 zeigt eine isometrische Darstellung einer Ausführungsvariante eines Deckels 11, der zum Verschließen einer Rotoraufnahmehülse 7 mit keilförmigen Halteelementen 22 ausgebildet ist. Der Deckel 11 kann hierzu an einem äußeren Rand in Umfangsrichtung 12 verteilt derartige keilförmige Halteelemente 22 aufweisen, die, beim Aufsetzten des Deckels 11 auf die Rotoraufnahmehülse 7, in Richtung eben dieser Rotoraufnahmehülse 7, also axial hervorstehen. Die keilförmigen Halteelemente 22 verjüngen sich in Richtung der Rotoraufnahmehülse 7. Zudem können am Deckel 11 in Umfangsrichtung 12 zylindrisch ausgeformte Abstandshalter 47 angeordnet sein, die in gleicher Richtung wie die keilförmigen Halteelemente 22 hervorstehen. Die Abstandshalter 47 können die Ankereinheit 8 axial in die Rotoraufnahmehülse 7 drücken bzw. die Ankereinheit 8 durch den axialen Druck, mit Hilfe einer später näher erläuterten keilförmigen Haltekontur 48 am Boden 27 der Rotoraufnahmehülse 7, radial verklemmen.

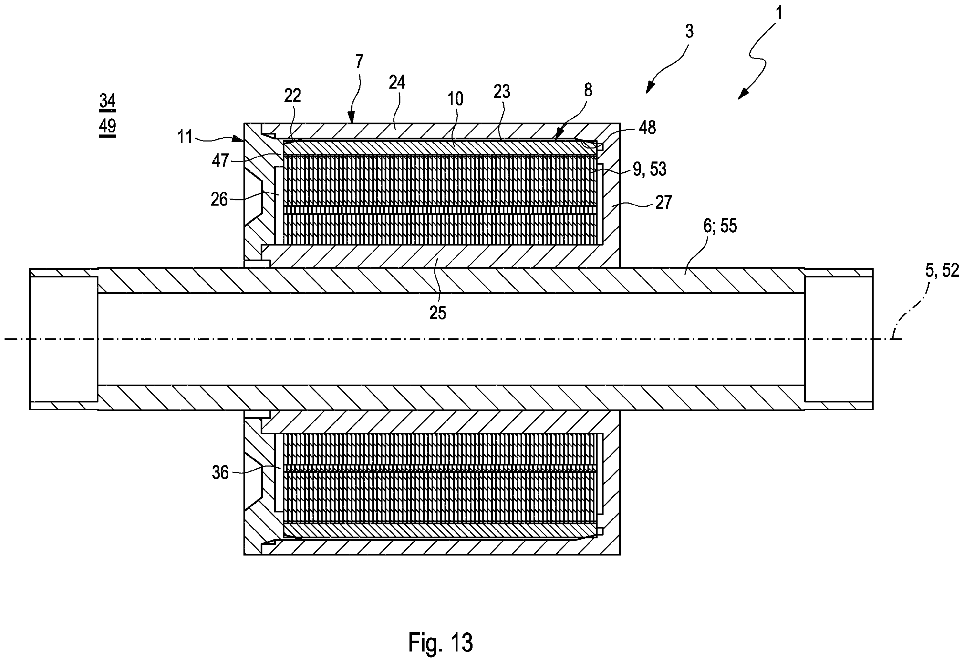

Fig. 13 zeigt eine Längsschnittdarstellung einer Ausführungsvariante einer Rotoraufnahmehülse 7 mit aufgesetztem Deckel 11 aus Fig. 12, die an einer Rotorwelle 6 angespritzt ist. Die Rotoraufnahmehülse 7 kann im Bereich des Bodens 27, an einer äußeren Wandung 24, eine keilförmige Haltekontur 48 aufweisen, die sich in Richtung der Öffnung 26 der Rotoraufnahmehülse 7 verjüngt. Eine eingeschobene Ankereinheit 8, die ein ringartiges Blechpaket 9 und mehrere Permanentmagnete 10 umfasst, kann in die Rotoraufnahmehülse 7 axial eingeschoben sein, wobei die Permanentmagneten 10 mit der keilförmigen Haltekontur 48 in Kontakt stehen und mit dieser verkeilen. Der zuvor beschriebene Deckel 11, mit angeordneten keilförmigen Halteelementen 22, verkeilt die Ankereinheit 8, insbesondere die Permanentmagnete 10, auf der Seite der Öffnung 26 der Rotoraufnahmehülse 7. Die keilförmigen Halteelemente 22 am Deckel 11 und die keilförmige Haltekontur 48 am Boden 27 der Rotoraufnahmehülse 7 liegen beide in einem radialen Bereich zwischen den Permanentmagneten 10 und der äußeren Wandung 24 der Rotoraufnahmehülse 7, der auch als Ringraum 23 bezeichnet werden kann.

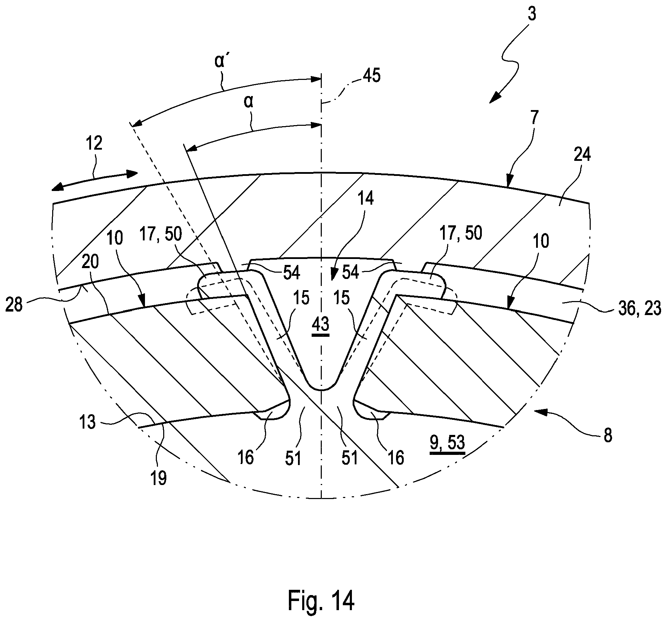

Ein in Fig. 13 im Übrigen nicht gezeigtes Pumpenlaufrad 49 kann nachträglich auf der Rotoraufnahmehülse 7 aufgebracht bzw. fest mit der Rotoraufnahmehülse 7 verbunden sein. Der Elektromotor 1 als solches bildet mit einem angebrachten Pumpenlaufrad 49 eine erfindungsgemäße elektrische Flüssigkeitspumpe 34. Bei der in Fig. 14 gezeigten Ausführungsform, die im Übrigen der in Fig. 8 gezeigten Ausführungsform entsprechen kann, sind an der inneren Mantelfläche 28 der äußeren Wandung 24 der Rotoraufnahmehülse 7 radial nach innen vorstehende Vorsprünge 54 ausgebildet. Vorzugsweise sind diese Vorsprünge 54 dabei an besagter äußeren Wandung 24 integral ausgeformt. Diese Vorsprünge 54, die sich insbesondere über das gesamte Blechpaket 9 erstrecken können, drücken wenigstens eine der Rastnasen 17 radial nach innen gegen den jeweiligen Permanentmagneten 10 an. Im gezeigten Beispiel ist jedem Haltearm 15 bzw. jeder Rastnase 17 ein separater Vorsprung 54 zugeordnet. Bei einer anderen, hier nicht gezeigten Ausführungsform kann auch ein gemeinsamer Vorsprung 54 vorgesehen sein, der beiden Haltearme 15 bzw. den beiden zugehörigen Rastnasen 17 der jeweiligen Haltevorrichtung 14 zugeordnet ist und diese gemeinsam gegen die beiden benachbarten Permanentmagnete 10 andrückt.

Bei allen hier gezigten Ausführungsformen kann vorgesehen sein, dass ein radial äußeres Ende der jeweiligen Haltevorrichtung 14 die radial am weitesten außenliegende Außenkontur des Blechpaktes 9 bildet. Das radial äußere Ende der jeweiligen Haltevorrichtung 14 ist hier durch die freien Enden 50 der Haltearme 15 bzw. durch die Rastnasen 17 gebildet.

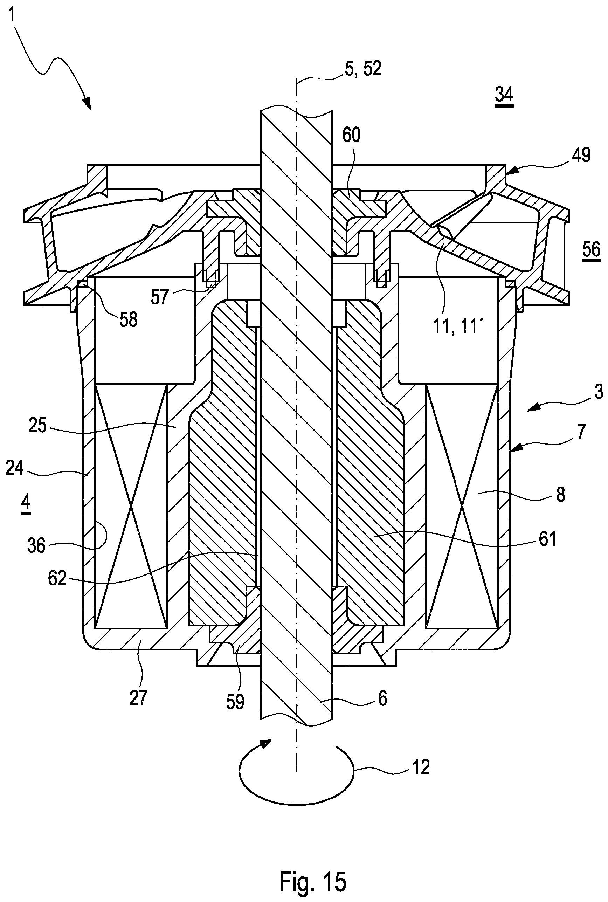

Während in Fig. 13 eine Ausführungsform angedeutet ist, bei welcher ein separates Pumpenlaufrad 49 am Rotor 3 drehfest angebracht ist, zeigt Fig. 15 eine Ausführungsform, bei welcher der Deckel 11 selbst das Pumpenlaufrad 49 bildet bzw. bei welcher der Deckel 11 als Pumpenlaufrad 49 ausgestaltet ist.

Die Rotoraufnahmehülse 7 enthält besagten Ankeraufnahmeraum 36 zur Aufnahme der Ankereinheit 8. Zweckmäßig ist dieser Ankeraufnahmeraum 36 an einer dem Pumpenlaufrad 49 zugewandten Axialseite offen, so dass die Ankereinheit 8 an dieser Axialseite axial in die Rotoraufnahmehülse 7 einsetzbar ist. Zur Abdichtung gegenüber der geförderten Flüssigkeit 56 ist der Ankeraufnahmeraum 36 im zusammengebauten Zustand des Rotors 3 verschlossen. Hierzu kann besagter separater Deckel 11 zum Einsatz kommen, der bei der in Fig. 13 gezeigten Ausführungsform bezüglich des Pumpenlaufrads 49 und bezüglich der übrigen Rotoraufnahmehülse 7 ein separates Bauteil ist. Grundsätzlich kann das Pumpenlaufrad 49 unmittelbar mit dem separaten Deckel 11 drehfest verbunden sein, der seinerseits drehfest mit der Rotoraufnahmehülse 7 verbunden ist.

Fig. 15 zeigt nun eine andere Ausführungsform, bei welcher der Deckel 11 als Pumpenlaufrad 49 zum Fördern einer Flüssigkeit ausgestaltet ist. Hierzu können das Pumpenlaufrad 49 und der Deckel 11 einteilig ausgestaltet sein. Mit anderen Worten, der Deckel 11 ist in diesem Fall integral am Pumpenlaufrad 49 ausgeformt. Dies ist auch gleichbedeutend damit, dass das Pumpenlaufrad 49 als Zusatzfunktion gleichzeitig den Deckel 11 bildet. In der Folge besitzt das Pumpenlaufrad 49 einen Deckelabschnitt 11'. In Fig. 15 verschließt also das Pumpenlaufrad 49 bzw. dessen Deckelabschnitt 11' den Ankeraufnahmeraum 36 der Rotoraufnahmehülse 7.

Gemäß den Fig. 3, 13 und 15 ist der Ankeraufnahmeraum 36 ringförmig ausgestaltet und radial innen durch die vorzugsweise zylindrische innere Wandung 25 und radial außen durch die vorzugsweise zylindrische äußere Wandung 24 begrenzt. Hierdurch besitzt die Ankereinheit 8 keinen Kontakt zur Rotorwelle 6.

Bevorzugt weist die Rotoraufnahmehülse 7 an ihrem vom Pumpenlaufrad 49 abgewandten Axialende den Boden 27 auf, der die innere Wandung 25 mit der äußeren Wandung 24 verbindet. Das bedeutet, dass der Ankeraufnahmeraum 36 an der dem Pumpenlaufrad 49 zugewandten Axialseite offen ist, so dass die Ankereinheit 8 an dieser Axialseite einsetzbar ist. Bevorzugt kann außerdem vorgesehen sein, dass innere Wandung 25, äußere Wandung 24 und Boden 27 einteilig hergestellt sind, z.B. als Spritzgussteil, und einen monolithischen Körper bilden.

Gemäß Fig. 15 kann das den Deckel 11 bildende bzw. den Deckelabschnitt 11' aufweisende Pumpenlaufrad 49 mit einer inneren Schweißverbindung 57 an der inneren Wandung 25 und mit einer äußeren Schweißverbindung 58 an der äußeren Wandung 24 befestigt sein. Die äußere Schweißverbindung 58 dichtet den Ankeraufnahmeraum 36 nach außen gegenüber der Flüssigkeit 56, die den Rotor 3 umgibt. Auch die innere Schweißverbindung 57 dichtet den Ankeraufnahmeraum 36 nach außen gegenüber der Flüssigkeit 56, die entlang der Rotorwelle 6 an Lagerhülsen 59, 60 vorbei in den von der inneren Wandung 25 eingefassten Raum eintreten kann.

Gemäß der hier gezeigten Ausführungsform der Fig. 15 können zur verbesserten Integration der Rotorwelle 6 in den Rotor 3 die beiden axial voneinander beabstandeten Lagerhülsen 59, 60 vorgesehen sein. Die beiden Lagerhülsen 59, 60 sind dabei so ausgestaltet und auf die Rotorwelle 6 und eine gegebenenfalls vorhandene die Lagerbuchse 61 abgestimmt, dass radial zwischen der Lagerbuchse 61 und der Rotorwelle 6 ein Ringraum 62 ausgebildet ist.

Im Beispiel der Fig. 15 die eine Lagerhülse 59 an einem vom Pumpenlaufrad 49 abgewandten Längsende der Lagerbuchse 61 an der Lagerbuchse 61 angeordnet, während die andere Lagerhülse 60 axial von der Lagerbuchse 61 beabstandet im bzw. am Pumpenlaufrad 49 angeordnet ist. Hierdurch lässt sich die axiale Länge des Rotors 3 mit Pumpenlaufrad 49 reduzieren.

## Patentansprüche

1. Elektromotor (1), insbesondere für ein Kraftfahrzeug (2), umfassend:
- einen innenliegenden Rotor (3), der um eine Drehachse (5), relativ zu einem außenliegenden Stator (4) drehbar gelagert ist,
- wobei der Rotor (3) eine um eine Rotorwelle (6) angeordnete topfartige Rotoraufnahmehülse (7) zur Aufnahme einer Ankereinheit (8) aufweist, die ein vielschichtiges Blechpaket (9) mit mehreren Permanentmagneten (10) aufweist,
- wobei die Rotoraufnahmehülse (7) mit einem Deckel (11) fluiddicht verschlossen ist,
- wobei die Permanentmagnete (10) in Umfangsrichtung (12) voneinander beabstandet an einer radialen Außenseite (13) des Blechpaketes (9) angeordnet sind,
- wobei erste Haltevorrichtungen (14) in Zwischenräumen (43) von benachbarten Permanentmagneten (10) integral am Blechpaket (9) ausgebildet sind und ein Verrutschen in Umfangsrichtung (12) verhindern,
**dadurch gekennzeichnet,**
- **dass** radial zwischen den Permanentmagneten (10) und einer inneren Mantelfläche (28) einer äußeren Wandung (24) der Rotoraufnahmehülse (7) ein Ringraum (23) ausgebildet ist,
- **dass** der Deckel (11) an einem äußeren Rand in Umfangsrichtung (12) verteilt keilförmige Halteelemente (22) aufweist, die in den Ringraum (23) eingreifen, derart, dass sie die Permanentmagnete (10) radial verkeilen, und
- **dass** die Rotoraufnahmehülse (7) im Bereich eines Bodens (27), an einer inneren Mantelfläche (28) der äußeren Wandung (24), eine axial in den Ringraum (23) hineinragende, in Umfangsrichtung (12) umlaufende, keilförmige Haltekontur (48) aufweist, die die Permanentmagnete (10) radial verkeilt.

2. Elektromotor nach Anspruch 1,
**dadurch gekennzeichnet,**
- **dass** die jeweilige erste Haltevorrichtung (14) im jeweiligen Zwischenraum (43) zwei separate Haltearme (15) aufweist, die in derselben Axialebene in Umfangsrichtung (12) benachbart sind,
- **dass** die beiden Haltearme (15) der jeweiligen Haltevorrichtung (14) voneinander weg geneigt sind, so dass die Haltearme (15) an ihren freien Enden (50) in der Umfangsrichtung (12) einen größeren Abstand haben als an ihren festen Enden (51), mit denen sie mit dem Blechpacket (9) verbunden sind.

3. Elektromotor nach Anspruch 1 oder 2,
**dadurch gekennzeichnet,**
**dass** eine derartige erste Haltevorrichtung (14) in Umfangsrichtung (12) beidseitig Haltearme (15) aufweist, die derart geneigt in Richtung der dazu in Umfangsrichtung (12) benachbarten Permanentmagnete (10) ausgebildet sind, dass die Permanentmagnete (10) radial am Blechpaket (9) formschlüssig gehalten sind.

4. Elektromotor nach Anspruch 2 oder 3,
**dadurch gekennzeichnet,**
- **dass** das Blechpaket (9) im Bereich der ersten Haltevorrichtung (14) eine axiale Aussparung (16) aufweist, die nutartig ausgebildet ist,
- **dass** jedem Haltearm (15) der jeweiligen Haltevorrichtung (14) jeweils eine solche nutartige, axiale Aussparung (16) zugeordnet ist, die sich an einer dem jeweils benachbarten Permanentmagneten (10) zugewandten Seite des jeweiligen Haltearms (15) im Blechpaket (9) befindet.

5. Elektromotor nach einem der Ansprüche 1 bis 4,
**dadurch gekennzeichnet,**
- **dass** ein derartiger Haltearm (15) der ersten Haltevorrichtung (14) zusätzlich an dessen Längsende eine Rastnase (17) aufweist, die in Umfangsrichtung (12) einen solchen Permanentmagneten (10) übergreift,
- **dass** an einer inneren Mantelfläche (28) einer äußeren Wandung (24) der Rotoraufnahmehülse (7) radial nach innen vorstehende Vorsprünge (54) ausgebildet sind, die wenigstens eine der Rastnasen (17) radial nach innen gegen den jeweiligen Permanentmagneten (10) andrücken.

6. Elektromotor nach einem der Ansprüche 1 bis 5,
**dadurch gekennzeichnet,**
- **dass** die Permanentmagnete (10) derart ausgeformt sind, dass die jeweiligen Längsenden in Umfangsrichtung (12) Schrägen (18) aufweisen,
- **dass** der Neigungsgrad der Schrägen (18) derart ausgewählt ist, dass eine radial innenliegende Umfangskontur (19) des jeweiligen Permanentmagneten (10) größer ist als eine radial außenliegende Umfangskontur (20) des jeweiligen Permanentmagneten (10),
- **dass** die Permanentmagnete (10) beidseitig an den der jeweiligen ersten Haltevorrichtung (14) zugewandten Längsseiten jeweils ein Stufe (21) aufweisen, an der die jeweilige erste Haltevorrichtung (14), insbesondere deren Haltearm (15) und/oder deren Rastnase (17), mit den Permanentmagneten (10) zusammenwirkt,
- **dass** Haltearme (15) der ersten Haltevorrichtung (14) in Umfangsrichtung (12) gegen die Permanentmagnete (10) vorgespannt sind.

7. Elektromotor nach einem der Ansprüche 1 bis 6,
**dadurch gekennzeichnet,**
- **dass** an einer inneren Mantelfläche (28) der äußeren Wandung (24) der Rotoraufnahmehülse (7) zumindest eine zweite Haltevorrichtung (29) radial in den Ringraum (23) vorsteht, welche zumindest einen der Permanentmagnete (10) radial zwischen dem Blechpaket (9) und der äußeren Wandung (24) der Rotoraufnahmehülse (7) verklemmt,
- **dass** die zweite Haltevorrichtung (29)
- entweder als eine wulstartige Verdickung (30) ausgeformt ist und dass zumindest ein derartiger Permanentmagnet (10) mit einer derartigen wulstartigen Verdickung (30), bevorzugt mit mehreren wulstartigen Verdickungen (30), radial gegen das Blechpaket (9) angedrückt ist,
- oder zwei einander zugewandte, geneigte Haltearme (31) aufweist, die vorgespannt sind und gegen die Permanentmagnete (10) sowohl radial als auch in Umfangsrichtung (12) wirken.

8. Elektromotor nach Anspruch 7,
**dadurch gekennzeichnet,**
**dass** die zweite Haltevorrichtung (29) zumindest teilweise abgeschrägt in einer äußeren Wandung (24), in Richtung einer Öffnung (26) der topfartigen Rotoraufnahmehülse (7), ausläuft.

9. Elektromotor nach einem der Ansprüche 1 bis 8,
**dadurch gekennzeichnet,**
- **dass** die Rotoraufnahmehülse (7) und/oder der Deckel (11) als Kunststoff-Spritzgussteile ausgebildet sind,
- **dass** die Rotoraufnahmehülse (7) direkt an die Rotorwelle (6) angespritzt ist oder dass die Rotoraufnahmehülse (7) an eine Lagerbuchse (55) angespritzt ist, die zur Aufnahme einer derartigen Rotorwelle (6) ausgebildet ist.

10. Elektromotor nach einem der Ansprüche 1 bis 9,
**dadurch gekennzeichnet,**
- **dass** die Rotoraufnahmehülse (7) an einer inneren Wandung (25) an einer der Öffnung (26) zugewandte Seite eine Ringstufe (32), zur Schaffung einer zum Deckel (11) und zur Rotorwelle (6) bzw. zur Lagerbuchse (55) offenen Aussparung (33), aufweist, und/oder
- **dass** zumindest bei noch nicht montiertem Deckel (11), die innere Wandung (25) und/oder die äußere Wandung (24) der Rotoraufnahmehülse (7) an einer dem Deckel (11) zugewandten Seite spitz zuläuft/zulaufen.

11. Elektromotor nach einem der Ansprüche 1 bis 10,
**dadurch gekennzeichnet,**
- **dass** der Deckel (11) für die Rotoraufnahmehülse (7) radial beabstandet von der Rotorwelle (6) oder der Lagerbuchse (55) angeordnet ist, und/oder
- **dass** der Deckel (11) zum fluiddichten Abschließen eines Ankeraufnahmeraumes (36) vorgesehen ist und der Deckel (11) insbesondere mit der Rotoraufnahmehülse (7), beispielsweise durch Ultraschallschweißen, Rotationsreibschweißen oder Laserschweißen, verschweißt ist, und/oder
- **dass** der Deckel (11) als Pumpenlaufrad (49) zum Fördern einer Flüssigkeit ausgestaltet ist.

12. Verfahren zur Herstellung eines Elektromotors (1) nach einem der vorherigen Ansprüche mit den Schritten:
- Einschieben des Blechpakets (9) in axialer Richtung in den Ankeraufnahmeraum (36) der Rotoraufnahmehülse (7),
- Einschieben der Permanentmagnete (10) in axialer Richtung in den Bereich zwischen den ersten Haltevorrichtungen (14) des Blechpaketes (9) und der äußeren Wandung (24) der Rotoraufnahmehülse (7),
- Verschließen der Rotoraufnahmehülse (7) durch Aufschweißen des Deckels (11).

13. Elektrische Maschine (35),
**dadurch gekennzeichnet,**
**dass** die elektrische Maschine (35) zumindest einen Elektromotor (1) nach einem der Ansprüche 1 bis 11 aufweist.

14. Flüssigkeitspumpe zum Fördern einer Flüssigkeit,
- mit einem Pumpenlaufrad (49), das, wenn es dreht, die Flüssigkeit fördert,
- mit einen Elektromotor (1) nach einem der Ansprüche 1 bis 11 zum drehenden Antreiben des Pumpenlaufrads (49).

15. Flüssigkeitspumpe nach Anspruch 14,
**dadurch gekennzeichnet,**
- **dass** das Pumpenlaufrad (49) separat zum Deckel (11) ausgebildet ist und unmittelbar mit dem Rotor (3) drehfest verbunden ist, insbesondere mittels Ultraschallschweißens mit diesem verschweißt ist, oder
- **dass** der Deckel (11) als Pumpenlaufrad (49) ausgestaltet ist und unmittelbar mit dem Rotor (3) drehfest verbunden ist, insbesondere mittels Ultraschallschweißens mit diesem verschweißt ist.

## Claims

1. Electric motor (1), in particular for a motor vehicle (2), comprising:
- an internal rotor (3) which is rotatably supported about a rotation axis (5) relative to an external stator (4),
- wherein the rotor (3) has a pot-like rotor receiving sleeve (7) arranged around a rotor shaft (6) for receiving an armature unit (8) which has a multiple-layered metal sheet assembly (9) with a plurality of permanent magnets (10),
- wherein the rotor receiving sleeve (7) is closed with a cover (11) in a fluid-tight manner,
- wherein the permanent magnets (10) are arranged with spacing from each other in a peripheral direction (12) at a radial outer side (13) of the metal sheet assembly (9),
- wherein in that first retention devices (14) are constructed integrally on the metal sheet assembly (9) in intermediate spaces (43) of adjacent permanent magnets (10) and prevent slippage in a peripheral direction (12), **characterized in that**
- an annular space (23) is formed radially between the permanent magnets (10) and an outer wall (24) of the rotor receiving sleeve (7),
- the cover (11) has at an outer edge in a peripheral direction (12) distributed wedge-like retention elements (22) which engage in the annular space (23) so that they radially wedge the permanent magnets (10), and
- the rotor receiving sleeve (7) in the region of a base (27) has, at an inner covering surface (28) of the outer wall (24), an axial projection into the annular space (23), in a peripheral direction (12) circumferential wedge-like retention contour (48) which radially wedges the permanent magnets (10).

2. Electric motor according to Claim 1,
**characterized in that**
- the respective first retention device (14) has, in the respective space (43), two separate retention arms (15) which are adjacent in the same axial plane in the peripheral direction (12),
- the two retention arms (15) of the respective retention device (14) are inclined away from one another, so that the retention arms (15) have a greater distance at their free ends (50) in the peripheral direction (12) than at their fixed ends (51) to which they are connected to the metal sheet assembly (9).

3. Electric motor according to Claim 1 or 2,
**characterized in that**
such a first retention device (14) has at both sides in a peripheral direction (12) retention arms (15) which are constructed to be so inclined in the direction of the permanent magnets (10) adjacent thereto in a peripheral direction (12) that the permanent magnets (10) are radially retained on the metal sheet assembly (9) in a positive-locking manner.

4. Electric motor according to any one of Claim 1 to 3,
**characterized in that**
- the metal sheet assembly (9) has in the region of the first retention device (14) an axial recess (16) which is constructed in a groove-like manner,
- each retention arm (15) of the respective retention device (14) is assigned in each case one such groove-like axial recess (16), which is located in the metal sheet assembly (9) on a side of the respective retention arm (15) facing the respective adjacent permanent magnet (10).

5. Electric motor according to any one of Claims 1 to 4,
**characterized in that**
- such a retention arm (15) of the first retention device (14) further has at the longitudinal end thereof a catch projection (17) which engages over such a permanent magnet (10) in a peripheral direction (12),
- radially inwardly projecting projections (54) are formed on an inner circumferential surface (28) of an outer wall (24) of the rotor receiving sleeve (7), which press at least one of the catch projections (17) radially inwardly against the respective permanent magnet (10).

6. Electric motor according to any one of Claims 1 to 5,
**characterized in that**
- the permanent magnets (10) are formed in such a manner that the respective longitudinal ends have inclinations (18) in a peripheral direction (12),
- **in that** the degree of inclination of the inclinations (18) is selected so that a radially internal peripheral contour (19) of the respective permanent magnet (10) is greater than a radially external peripheral contour (20) of the respective permanent magnet (10),
- the permanent magnets (10) have at both sides at the longitudinal sides which face the respective first retention device (14), one step (21) each at which the respective first retention device (14), in particular their retention arm (15) and/or their catch projection (17), interacts with the permanent magnets (10),
- retention arms (15) of the first retention device (14) are pretensioned in a peripheral direction (12) counter to the permanent magnets (10).

7. Electric motor according to any one of Claims 1 to 6,
**characterized in that**
- an annular space (23) is formed radially between the permanent magnets (10) and an outer wall (24) of the rotor receiving sleeve (7),
- at least a second retention device (29) projects radially into the annular space (23) at an inner covering surface (28) of the outer wall (24) of the rotor receiving sleeve (7) and clamps at least one of the permanent magnets (10) radially between the metal sheet assembly (9) and the outer wall (24) of the rotor receiving sleeve (7),
- the second retention device (29)
- either is formed as a bead-like thickened portion (30) and **in that** at least one such permanent magnet (10) is pressed with such a bead-like thickened portion (30) radially against the metal sheet assembly (9), preferably with a plurality of bead-like thickened portions (30),
- or has two mutually facing, inclined retention arms (31) which are pretensioned and act both radially and in a peripheral direction (12) counter to the permanent magnets (10).

8. Electric motor according to Claim 7,
**characterized in that**
the second retention device (29) at least partially terminates in an inclined manner in an outer wall (24) in the direction of an opening (26) of the pot-like rotor receiving sleeve (7).

9. Electric motor according to any one of Claims 1 to 8,
**characterized in that**
- the rotor receiving sleeve (7) and/or the cover (11) is/are constructed as plastic injection-moulding component(s),
- the rotor receiving sleeve (7) is injection-moulded directly on the rotor shaft (6) or **in that** the rotor receiving sleeve (7) is injection-moulded on a bearing bush (55) which is formed to receive such a rotor shaft (6).

10. Electric motor according to any one of Claims 1 to 9,
**characterized in that**
- the rotor receiving sleeve (7) has at an inner wall (25) at a side facing the opening (26) an annular step (32) for providing a recess (33) which is open with respect to the cover (11) and the rotor shaft (6) or the bearing bush (55),
- at least with the cover (11) not yet mounted, the inner wall (25) and/or the outer wall (24) of the rotor receiving sleeve (7) taper(s) in an acute manner at a side facing the cover (11).

11. Electric motor according to any one of Claims 1 to 10,
**characterized in that**
- the cover (11) for the rotor receiving sleeve (7) is arranged to be radially spaced apart from the rotor shaft (6) or the bearing bush (55), and/or
- the cover (11) is provided for the fluid-tight closure of an armature receiving space (36) and the cover (11) is welded in particular to the rotor receiving sleeve (7), for example, by ultrasonic welding, rotational friction welding or laser welding, or is injection-moulded thereon, and/or
- the cover (11) is formed as a pump running wheel (49) for conveying a liquid.

12. Method for producing an electric motor (1), in particular for an electric machine (35) or for an electric fluid pump (34), according to any one of the preceding claims having the steps of:
- inserting the metal sheet assembly (9) in an axial direction into the armature receiving space (36) of the rotor receiving sleeve (7),
- inserting the permanent magnets (10) in an axial direction into the region between the first retention devices (14) of the metal sheet assembly (9) and the outer wall (24) of the rotor receiving sleeve (7),
- closing the rotor receiving sleeve (7) by welding or injection-moulding the cover (11).

13. Electric machine (35),
**characterized in that**
the electric machine (35) has at least one electric motor (1) according to any one of claims 1 to 11.

14. Liquid pump for pumping a liquid,
- with a pump running wheel (49) which, when rotating, conveys the liquid,
- with an electric motor (1) according to any one of claims 1 to 11 for rotatably driving the pump running wheel (49).

15. Fluid pump according to Claim 14,
**characterized in that**
- the pump running wheel (49) is formed separately from the cover (11) and is directly connected to the rotor (3) in a rotationally fixed manner, in particular welded to the rotor (3) by means of ultrasonic welding, or
- the cover (11) is configured as a pump running wheel (49) and is connected directly to the rotor (3) in a rotationally fixed manner, in particular welded to the rotor (3) by means of ultrasonic welding.

## Revendications

1. Moteur électrique (1), en particulier pour un véhicule automobile (2) comprenant :
- un rotor (3) intérieur qui est logé de manière rotative autour d'un axe de rotation (5) par rapport à un stator (4) extérieur,
- dans lequel le rotor (3) présente une douille de réception de rotor (7) de type pot agencée autour d'un arbre de rotor (6) pour la réception d'une unité d'ancrage (8) qui présente un paquet de tôles (9) à couches multiples avec plusieurs aimants permanents (10),
- dans lequel la douille de réception de rotor (7) est fermée de manière étanche au fluide avec un couvercle (11),
- dans lequel les aimants permanents (10) sont agencés en étant espacés dans le sens périphérique (12) les uns des autres, au niveau d'un côté extérieur (13) radial du paquet de tôles (9),
- dans lequel des premiers dispositifs de retenue (14) sont réalisés dans des espaces intermédiaires (43) d'aimants permanents (10) contigus d'un seul tenant au niveau du paquet de tôles (9) et empêchent un glissement dans le sens périphérique (12),
**caractérisé en ce**
- **qu'**un espace annulaire (23) est réalisé radialement entre les aimants permanents (10) et une surface enveloppe (28) intérieure d'une paroi extérieure (24) de la douille de réception de rotor (7),
- **que** le couvercle (11) présente des éléments de retenue (22) en forme de coin répartis au niveau d'un bord extérieur dans le sens périphérique (12) qui viennent en prise dans l'espace annulaire (23) de telle manière qu'ils coincent radialement les aimants permanents (10), et
- **que** la douille de réception de rotor (7) présente dans la zone d'un fond (27), au niveau d'une surface enveloppe (28) intérieure de la paroi (24) extérieure, un contour de retenue (48) en forme de coin, tournant dans le sens périphérique (12), pénétrant axialement dans l'espace annulaire (23) qui coince radialement les aimants permanents (10).

2. Moteur électrique selon la revendication 1,
**caractérisé en ce**
- **que** le premier dispositif de retenue (14) respectif présente dans l'espace intermédiaire (43) respectif deux bras de retenue (15) séparés qui sont contigus dans le même plan axial dans le sens périphérique (12),
- **que** les deux bras de retenue (15) du dispositif de retenue (14) respectif sont inclinés loin l'un de l'autre de sorte que les bras de retenue (15) présentent au niveau de leurs extrémités libres (50) dans le sens périphérique (12) une distance supérieure à celle au niveau de leurs extrémités fixes (51), avec lesquelles ils sont reliés au paquet de tôles (9).

3. Moteur électrique selon la revendication 1 ou 2,
**caractérisé en ce**
**qu'**un premier dispositif de retenue (14) de la sorte présente dans le sens périphérique (12) de part et d'autre des bras de retenue (15) qui sont réalisés de manière inclinée en direction des aimants permanents (10) contigus dans le sens périphérique (12) afin que les aimants permanents (10) soient maintenus radialement sur le paquet de tôles (9) par complémentarité de formes.

4. Moteur électrique selon la revendication 2 ou 3,
**caractérisé en ce**
- **que** le paquet de tôles (9) présente dans la zone du premier dispositif de retenue (14) un évidement (16) axial qui est réalisé comme une rainure,
- **que** respectivement un tel évidement (16) axial de type rainure est associé à chaque bras de retenue (15) du dispositif de retenue (14) respectif, qui se trouve au niveau d'un côté tourné vers l'aimant permanent (10) respectivement contigu du bras de retenue (15) respectif dans le paquet de tôles (9).

5. Moteur électrique selon l'une des revendications 1 à 4,
**caractérisé en ce**
- **qu'**un bras de retenue (15) de la sorte du premier dispositif de retenue (14) présente en outre à son extrémité longitudinale un nez d'encliquetage (17) qui recouvre dans le sens périphérique (12) un tel aimant permanent (10),
- **qu'**au niveau d'une surface enveloppe (28) intérieure d'une paroi extérieure (24) de la douille de réception de rotor (7) des saillies (54) dépassant radialement vers l'intérieur sont réalisées, lesquelles pressent au moins un des nez d'encliquetage (17) radialement vers l'intérieur contre les aimants permanents (10) respectifs.

6. Moteur électrique selon l'une des revendications 1 à 5,
**caractérisé en ce**
- **que** les aimants permanents (10) sont formés de telle manière que les extrémités longitudinales respectives dans le sens périphérique (12) présentent des biais (18),
- **que** le degré d'inclinaison des biais (18) est sélectionné de telle manière qu'un contour périphérique (19) radialement intérieur de l'aimant permanent (10) respectif soit supérieur à un contour périphérique (20) radialement extérieur de l'aimant permanent (10) respectif,
- **que** les aimants permanents (10) présentent de part et d'autre au niveau des côtés longitudinaux respectifs tournés vers le premier dispositif de retenue (14) respectif respectivement un gradin (21), au niveau duquel le premier dispositif de retenue (14) respectif, en particulier son bras de retenue (15) et/ou son nez d'encliquetage (17) coagit avec les aimants permanents (10),
- **que** des bras de retenue (15) du premier dispositif de retenue (14) sont précontraints dans le sens périphérique (12) contre les aimants permanents (10).

7. Moteur électrique selon l'une des revendications 1 à 6,
**caractérisé en ce**
- **qu'**au niveau d'une surface enveloppe intérieure (28) de la paroi extérieure (24) de la douille de réception de rotor (7) au moins un second dispositif de retenue (29) dépasse radialement dans l'espace annulaire (23) ; qui coince au moins un des aimants permanents (10) radialement entre le paquet de tôles (9) et la paroi extérieure (24) de la douille de réception de rotor (7),
- **que** le second dispositif de retenue (29)
- est formé comme un épaississement (30) de type bourrelet et qu'au moins un aimant permanent (10) de la sorte est pressé avec un épaississement (30) de type bourrelet de la sorte, de préférence avec plusieurs épaississements (30) de type bourrelet, radialement contre le paquet de tôles (9),
- ou présente deux bras de retenue (31) inclinés tournés l'un vers l'autre qui sont précontraints et agissent contre les aimants permanents (10) non seulement radialement mais aussi dans le sens périphérique (12).

8. Moteur électrique selon la revendication 7,
**caractérisé en ce**
**que** le second dispositif de retenue (29) se termine au moins partiellement biaisé dans une paroi extérieure (24), en direction d'une ouverture (26) de la douille de réception de rotor (7) de type pot.

9. Moteur électrique selon l'une des revendications 1 à 8,
**caractérisé en ce**
- **que** la douille de réception de rotor (7) et/ou le couvercle (11) sont réalisés comme pièces moulées par injection de matière plastique,
- **que** la douille de réception de rotor (7) est moulée par injection directement sur l'arbre de rotor (6) ou que la douille de réception de rotor (7) est moulée par injection sur un coussinet de palier (55) qui est réalisé pour la réception d'un tel arbre de rotor (6).

10. Moteur électrique selon l'une des revendications 1 à 9,
**caractérisé en ce**
- **que** la douille de réception de rotor (7) présente au niveau d'une paroi intérieure (25) sur un côté tourné vers l'ouverture (26) un gradin annulaire (32), pour la création d'un évidement (33) ouvert vers le couvercle (11) et vers l'arbre de rotor (6) ou vers le coussinet de palier (55), et/ou
- **qu'**au moins en cas de couvercle (11) pas encore monté, la paroi intérieure (25) et/ou la paroi extérieure (24) de la douille de réception de rotor (7) converge(nt) de façon conique au niveau d'un côté tourné vers le couvercle (11).

11. Moteur électrique selon l'une des revendications 1 à 10,
**caractérisé en ce**
- **que** le couvercle (11) pour la douille de réception de rotor (7) est agencé radialement à distance de l'arbre de rotor (6) ou du coussinet de palier (55), et/ou
- **que** le couvercle (11) est prévu pour terminer de manière étanche au fluide un espace de réception d'ancre (36) et le couvercle (11) est soudé en particulier avec la douille de réception de rotor (7), par exemple par soudage par ultrasons, soudage par friction et rotation ou soudage laser, et/ou
- **que** le couvercle (11) est configuré comme rotor de pompe (49) pour le refoulement d'un liquide.

12. Procédé de fabrication d'un moteur électrique (1) selon l'une des revendications précédentes avec les étapes :
- l'insertion du paquet de tôles (9) dans le sens axial dans l'espace de réception d'ancre (36) de la douille de réception de rotor (7),
- l'insertion des aimants permanents (10) dans le sens axial dans la zone entre les premiers dispositifs de retenue (14) du paquet de tôles (9) et la paroi extérieure (24) de la douille de réception de rotor (7),
- la fermeture de la douille de réception de rotor (7) par soudage du couvercle (11).

13. Machine électrique (35),
**caractérisée en ce**
**que** la machine électrique (35) présente au moins un moteur électrique (1) selon l'une des revendications 1 à 11.

14. Pompe de liquide pour le refoulement d'un liquide,
- avec un rotor de pompe (49) qui, lorsqu'il tourne, refoule le liquide,
- avec un moteur électrique (1) selon l'une des revendications 1 à 11 pour l'entraînement rotatif du rotor de pompe (49).

15. Pompe de liquide selon la revendication 14,
**caractérisée en ce**
- **que** le rotor de pompe (49) est réalisé séparément du couvercle (11) et est relié sans pouvoir tourner directement au rotor (3), en particulier au moyen du soudage par ultrasons à celui-ci, ou
- **que** le couvercle (11) est configuré comme rotor de pompe (49) et est relié sans pouvoir tourner directement au rotor (3), en particulier est soudé au moyen du soudage par ultrasons à celui-ci.
